# FASCICULE DE BREVET EUROPEEN

(11) **EP 3 732 849 B1**
(45) Date de publication et mention de la délivrance du brevet: **26.07.2023**
(21) Numéro de dépôt: 18826085.5
(22) Date de dépôt: 24.12.2018
(51) Int. Cl.: H04L 9/40, G06F 21/44

(54) **PROCÉDÉ ET SYSTÈME D'IDENTIFICATION DE TERMINAL D'UTILISATEUR POUR LA RÉCEPTION DE CONTENUS MULTIMÉDIA PROTÉGÉS ET FOURNIS EN CONTINU**
VERFAHREN UND SYSTEM ZUR IDENTIFIZIERUNG EINES BENUTZERENDGERÄTS ZUM EMPFANGEN VON STREAMING-GESCHÜTZTEN MULTIMEDIA-INHALTEN
METHOD AND SYSTEM FOR IDENTIFYING A USER TERMINAL IN ORDER TO RECEIVE STREAMING PROTECTED MULTIMEDIA CONTENT

(30) Priorité: 26.12.2017 FR 1763211
(43) Date de publication de la demande: 04.11.2020
(73) Titulaire: Viaccess, 92057 Paris La Défense Cedex (FR)
(72) Inventeur: PHIRMIS, Mathieu, 92160 Antony (FR)
(74) Mandataire: Lavoix
(86) Numéro de dépôt international: PCT/EP2018/086857
(87) Numéro de publication internationale: WO 2019/129771

(56) Documents cités:
- US-A1- 2012 284 797
- Andreas Gal: "Reconciling Mozilla's Mission and W3C EME - Mozilla Hacks - the Web developer blog", hacks.mozilla.org, 14 mai 2014 (2014-05-14), XP055512842, Extrait de l'Internet: URL:https://hacks.mozilla.org/2014/05/reco nciling-mozillas-mission-and-w3c-eme/ [extrait le 2018-10-05]
- ERIC HSIAOKUANG WU ET AL: "A flexible and lightweight user-demand DRM system for multimedia contents over multiple portable device platforms : Flexible Lightweight DRM", SOFTWARE PRACTICE & EXPERIENCE., vol. 47, no. 10, 17 février 2017 (2017-02-17), pages 1417-1441, XP055512820, GB ISSN: 0038-0644, DOI: 10.1002/spe.2479
- John C. Simmons: "Content Decryption Module Interface Specification", , 2 janvier 2014 (2014-01-02), XP055512959, Extrait de l'Internet: URL:http://download.microsoft.com/download /E/A/4/EA470677-6C3C-4AFE-8A86-A196ADFD0F7 8/Content%20Decryption%20Module%20Interfac e%20Specification.pdf [extrait le 2018-10-05]

## Description

La présente invention concerne un procédé d'identification de terminal d'utilisateur pour la réception et la restitution de contenus multimédia protégés et transmis en continu, sous forme chiffrée, via un réseau de communications ouvert, et un système d'identification de terminal d'utilisateur associé. Elle concerne également un procédé d'authentification de terminal d'utilisateur, et un système d'authentification de terminal d'utilisateur associé.

Elle se situe dans le domaine de la protection des contenus multimédia, en particulier des contenus audiovisuels, protégés par des systèmes de gestion de droits numériques, ou DRM, pour « digital rights management » en anglais, et transmis en continu, c'est-à-dire selon le mode de transmission couramment appelé « streaming », sur un réseau ouvert, tel qu'Internet.

En effet, le développement récent de la technologie « Over The Top », ou OTT, a permis de généraliser la transmission en continu de contenus multimédia sur Internet, à partir de serveurs conventionnels ou dédiés, avec un débit adaptatif et permettant une restitution de qualité satisfaisante sur des dispositifs clients de type ordinateur personnel.

Plusieurs protocoles de transmission en continu ont été développés, par exemple le standard ISO MPEG Dynamic Adaptive Streaming over HTTP (DASH), le protocole HLS^{®} (« HTTP LIVE STREAMING ») proposé par Apple^{®}, et MSS^{®} (« Microsoft Smooth Streaming ») proposé par Microsoft^{®}. En particulier, de tels protocoles sont utilisables pour la transmission de contenus multimédia protégés par tout système de DRM, et pour leur restitution par tout navigateur web.

De plus, l'organisme de standardisation W3C (World Wide Web Consortium) a mis au point une extension de la norme HTML5 appelée EME (pour « Encrypted Media Extension ») qui spécifie un canal de communication entre un navigateur web (en anglais « browser ») et l'agent DRM, ou module de déchiffrement de contenu, appelé également CDM (pour « Content Decryption Module » en anglais), d'un système de DRM.

De manière connue, un navigateur web, ou navigateur Internet, ou plus simplement navigateur, est un logiciel client HTTP conçu pour consulter et afficher des données du réseau Internet. Il existe de nombreux navigateurs, pour toutes sortes de terminaux d'utilisateur (ordinateur personnel, tablette tactile, téléphone intelligent) et pour différents systèmes d'exploitation.

Un CDM, ou module de déchiffrement de contenus, est un module logiciel, également appelé « agent DRM », d'un terminal d'utilisateur, qui met en oeuvre, localement à ce terminal, des mécanismes d'un système de DRM pour contribuer à assurer la distribution licite de contenus protégés et le respect des obligations vis-à-vis des ayants-droit. Ces mécanismes recourent en particulier à des moyens de déchiffrement et des moyens de vérification de droits d'accès aux contenus protégés par ce système de DRM.

Il existe plusieurs systèmes de DRM, et agents DRM correspondants, par exemple PlayReady^{®}, Widevine DRM^{®} ou FairPlay^{®}. Le choix du navigateur utilisé détermine le système de DRM utilisé. Le choix du protocole de transmission en continu est à la discrétion de l'opérateur du service de fourniture de contenus, et indépendant de celui du navigateur utilisé.

La mise en oeuvre de l'extension EME de HTML5 permet une utilisation simplifiée de mécanismes de protection par DRM, de manière transparente par rapport aux terminaux utilisés, aux systèmes d'exploitation et aux navigateurs implémentés.

Le document « Reconciling Mozilla's Mission and W3C EME - Mozilla Hacks - the Web developer blog", d'Andreas Gal, publié sur Internet à l'URL « https://hacks.mozilla.org/2014/05/reconciling-mozillas-mission-and-w3c-eme/ » concerne l'intégration de l'extension EME dans les navigateurs « Firefox » de Mozilla^{®}, décrivant en particulier l'utilisation d'un module de déchiffrement CDM.

De manière usuelle de nos jours chaque utilisateur dispose de plusieurs appareils ou terminaux d'utilisateur (smartphone, tablette, PC) qu'il utilise en parallèle. Lorsqu'un utilisateur souhaite accéder à des contenus multimédia protégés, par exemple via un abonnement à un service de fourniture de télévision par Internet, il souhaite pouvoir visualiser ces contenus sur tous ses terminaux.

Cependant, l'utilisation du système de transmission de contenus OTT décrit brièvement ci-dessus rend plus difficile le contrôle anti-piratage des contenus multimédia protégés. En effet, une application implémentant HTML5 via Java Script n'a pas accès aux ressources matérielles du terminal d'utilisateur, et ne permet donc pas d'identifier de manière unique et pérenne ce terminal.

Par conséquent, il est difficile d'identifier un terminal d'utilisateur qui accède à des contenus multimédia protégés, ce qui est pourtant une exigence forte des ayants droit à laquelle tout fournisseur de contenus doit répondre. Une telle identification permet en effet d'améliorer le contrôle d'accès aux contenus, notamment en interdisant d'y accéder à un terminal anonyme ou inconnu du service de fourniture de contenus. Elle peut également permettre d'améliorer les contre-mesures à l'accès illégitime aux contenus, par exemple en marquant le contenu au moyen d'un filigrane, ou watermark, en anglais, élaboré sur la base de l'identifiant du terminal utilisé pour y accéder.

L'invention a pour objet un procédé permettant une identification du terminal utilisé pour la consommation de contenus multimédia protégés.

A cet effet, l'invention propose, selon un premier aspect, un procédé d'identification de terminal d'utilisateur selon la revendication 1

Avantageusement, le procédé de l'invention permet de déterminer un identifiant du terminal d'utilisateur, en lien avec un identifiant du module de déchiffrement de contenus, ou agent DRM, du terminal d'utilisateur, qui est un élément de sécurité du terminal d'utilisateur.

Le procédé d'identification de terminal d'utilisateur selon l'invention peut présenter une ou plusieurs des caractéristiques des revendications dépendances 2 à 10, prises indépendamment ou selon toutes les combinaisons acceptables.

Selon un autre aspect, l'invention concerne un système d'identification de terminal d'utilisateur selon la revendication 12.

Selon un autre aspect, l'invention concerne un procédé d'authentification de terminal d'utilisateur selon la revendication 11.

Selon un autre aspect, l'invention concerne un système d'authentification d'un terminal selon la revendication 13.

D'autres caractéristiques et avantages de l'invention ressortiront de la description qui en est donnée ci-dessous, à titre indicatif et nullement limitatif, en référence aux figures annexées, parmi lesquelles :
- la figure 1 illustre schématiquement un système de fourniture de contenus multimédia protégés par un système de DRM dans lequel l'invention trouve une application ;
- la figure 2 illustre schématiquement les principales étapes d'un procédé d'identification d'un terminal client selon un mode de réalisation de l'invention ;
- la figure 3 illustre schématiquement les principales étapes d'une authentification de terminal d'utilisateur mettant en oeuvre un identifiant de terminal obtenu par le procédé de la figure 2 ;

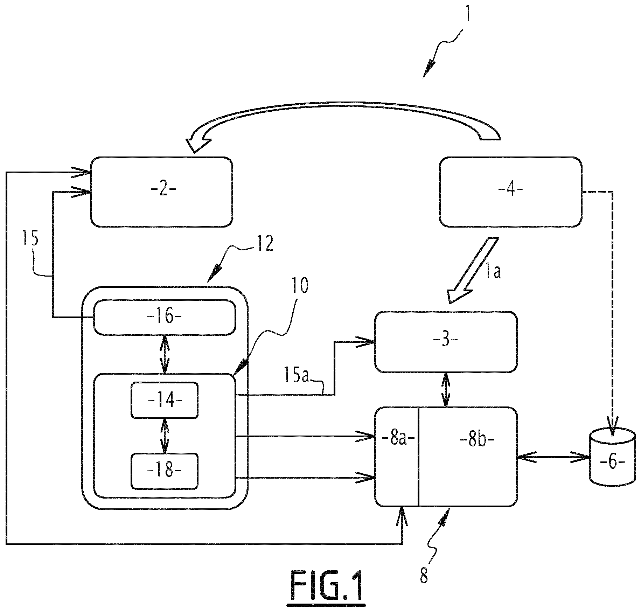

La figure 1 illustre schématiquement un système de fourniture de contenus multimédia 1 dans lequel l'invention trouve une application.

Le système de fourniture 1 comprend un serveur 2 de contenus multimédia protégés par un système de DRM, un tel serveur de contenus étant par exemple géré par un opérateur fournisseur de contenus. Le serveur 2 implémente également un contrôle de droits d'accès aux contenus. Le serveur 2 est par exemple un serveur d'un opérateur fournisseur de contenus de télévision numérique.

Bien entendu, le serveur 2 peut être implémenté sous forme d'un système de serveurs, comprenant d'une part un serveur de contrôle de droits d'accès à des contenus protégés mis en oeuvre par un opérateur, et des serveurs de contenus comprenant des données multimédia distants.

Le système de fourniture 1 comporte en outre un serveur 3 de contenus d'authentification, générés comme expliqué en détail ci-après.

Le système de fourniture 1 comprend également un module 4 de mise en forme des contenus qui permet de mettre en forme les contenus en fonction du protocole de transmission en continu, par exemple DASH, HLS ou MSS déjà mentionnés ci-dessus, en fonction du système de DRM cible, et de l'agent DRM correspondant, par exemple PlayReady^{®}, Widevine DRM^{®} ou FairPlay^{®}.

Une base de données 6, en relation avec un serveur de licences 8 fait également partie du système de fourniture 1. Le serveur de licences 8 est un serveur de licences connu 8b dans les systèmes de DRM de l'art antérieur, modifié pour intégrer un serveur d'authentification 8a adapté à mettre en oeuvre une fonction d'authentification de terminaux. Le serveur 8a d'authentification intègre par exemple le serveur 3 de contenus d'authentification.

En variante, le système de fourniture 1 comprend un serveur 8a d'authentification de terminaux selon l'invention et un serveur 8b de licences séparés et adaptés à communiquer entre eux, formant un serveur d'authentification et de licences.

Dans un mode de réalisation, la base de données 6 est mise en oeuvre par un module de mémorisation permettant de mémoriser un ensemble d'enregistrements, par exemple sous forme de fichier.

Chacun de ces enregistrements comporte un identifiant de contenu C-ID mis en forme par le module 4, et une clé cryptographique. Cette clé cryptographique est la clé de chiffrement avec laquelle le contenu C-ID a été chiffré au titre de sa mise en forme, ou, si elle est différente de la précédente, la clé de déchiffrement nécessaire pour déchiffrer le contenu C-ID tel qu'il a été chiffré au titre de sa mise en forme, ou un moyen d'obtenir cette clé. Cette base de données 6 est par exemple mémorisée sur le serveur 8 du système de fourniture 1.

Le serveur 8 est configuré pour recevoir des requêtes d'un navigateur web 10, installé sur un terminal d'utilisateur 12.

Ce navigateur web 10 comporte un module logiciel 14 de lecture de contenus multimédia, qui implémente HTML5 via Java Script.

Le terminal 12 comprend également un module logiciel 16 qui met en oeuvre une application du service de fourniture de contenus. Dans un mode de réalisation, cette application est en charge des interactions de l'utilisateur et/ou du terminal avec le serveur 2 de contenus, notamment pour identifier l'utilisateur ou le terminal, contrôler les droits d'accès de l'utilisateur du terminal, accéder aux contenus. Le module logiciel, désigné ici comme application du service de contenu, est par exemple une application de Web TV. L'accès aux contenus est représenté schématiquement par la flèche 15 à la figure 1.

Le lecteur de contenus 14 communique avec un CDM 18 qui met en oeuvre, localement à ce terminal 12, des mécanismes d'un système de DRM, en particulier le déchiffrement de contenus multimédia protégés. Le système de DRM mis en oeuvre est déterminé par le navigateur web 10 utilisé.

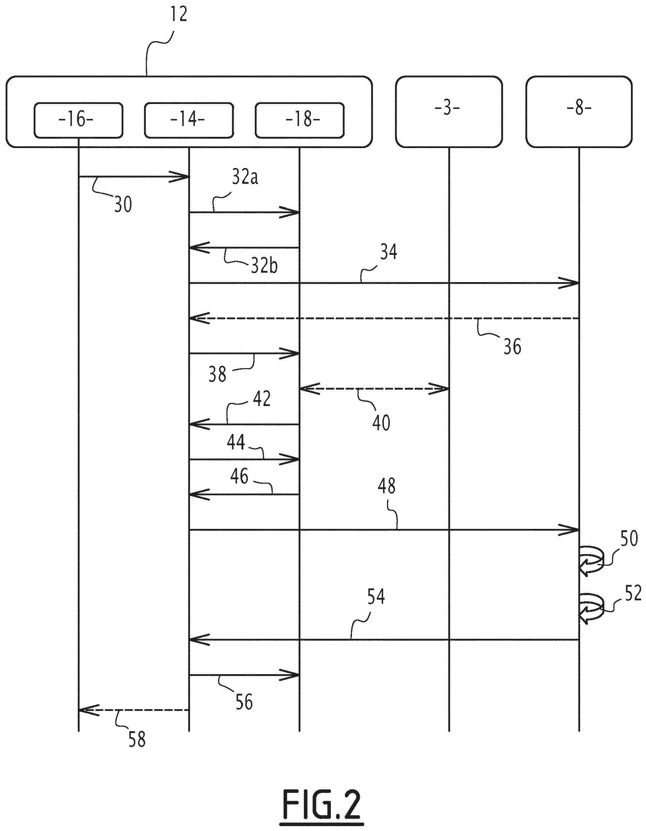

La figure 2 illustre schématiquement les principales étapes d'un procédé d'identification d'un terminal client selon un mode de réalisation de l'invention. Ces étapes sont implémentées par divers éléments du système de fourniture de contenus 1 décrit ci-dessus en référence à la figure 1.

Chacun des serveurs, ainsi que le terminal d'utilisateur, est un calculateur électronique qui comporte au moins un processeur adapté à exécuter des instructions de code. En variante, les étapes du procédé de l'invention sont mises en oeuvre par des dispositifs électroniques de type circuits logiques programmables, tels des cartes électroniques à base de FPGA ou ASIC.

Lors d'une première étape 30, l'application du service de contenus 16 envoie une requête d'identification de terminal d'utilisateur au lecteur de contenus multimédia 14.

Par exemple, dans un mode de réalisation, l'application 16 effectue cette étape 30 par l'intermédiaire d'une API (acronyme de « Application Programming Interface », en anglais), ou interface de programmation applicative, d'initialisation du lecteur de contenus multimédia 14.

Suite à la réception de la requête d'identification du terminal d'utilisateur, le lecteur de contenus 14 envoie au CDM 18 une requête 32a d'identification du système de DRM utilisé. Par exemple, la requête EME *requestMediaKeySystem()* est utilisée.

En réponse, le lecteur de contenus 14 obtient à l'étape 32b une valeur du paramètre *KeySystem* qui identifie le système de DRM utilisé, par exemple parmi Widevine^{®}, PlayReady^{®} et FairPlay^{®}.

Le lecteur de contenus multimédia 14 envoie vers le serveur 8 lors de l'étape 34 une requête de contenu d'authentification. La requête comporte un identifiant du système de DRM utilisé, par exemple sous la forme de la valeur du paramètre *KeySystem.*

Le contenu d'authentification est un contenu préalablement généré, protégé avec le système de DRM utilisé, et mémorisé comme contenu offert par le serveur de contenus d'authentification 3, dans le but qu'une requête d'accès à ce contenu déclenche l'identification du terminal origine de cette requête.

Plus précisément, le contenu d'authentification ayant été protégé avec le système de DRM utilisé, la requête d'accès à ce contenu d'authentification provoque l'initialisation d'une session de DRM, initialisation sur laquelle repose l'identification du terminal, dont le détail du déroulement est donc spécifique au système de DRM utilisé, et préalable à la lecture des données multimédia du contenu, s'il en comporte. De préférence, cependant, le contenu d'authentification ne comporte pas de données multimédia.

Le contenu d'authentification comprend ou permet d'accéder à un objet de description de droits (en anglais « Right Object ») associé au système de DRM utilisé. Un « right Object » contient notamment un en-tête spécifique au système de DRM utilisé, appelé PSSH pour « Protection System Specific Header ».

Par exemple, s'il a été mis en forme pour le protocole DASH, le contenu d'authentification est un fichier descriptif, également appelé fichier manifeste MPD (pour « Media Présentation Description »), qui indique un segment d'initialisation DASH qui contient un en-tête spécifique, connu sous le nom de « Protection System Specific Header » (PSSH). Le contenu d'authentification est ensuite chiffré conformément à la norme ISO Common Encryption (CENC), par exemple avec la technologie Widevine^{®}.

De manière analogue, s'il a été mis en forme pour le protocole MSS, le contenu d'authentification est par exemple un fichier descriptif de type manifeste ISMC, qui est ensuite chiffré conformément à la norme CENC, par exemple avec la technologie PlayReady^{®}.

De manière analogue, s'il a été mis en forme pour le protocole HLS, le contenu d'authentification est par exemple un fichier descriptif de type playlist M3U8, chiffré conformément à la norme CENC, par exemple avec la technologie FairPlay^{®}.

Dans chacun de ces exemples, le fichier descriptif du contenu d'authentification comporte, de manière connue pour tout contenu, un objet de description de droits ou « Right Object » nécessaire à l'initialisation d'une session de DRM en vue de lever la protection de ce contenu. Le « Right Object » contient un identifiant du système de DRM avec lequel le contenu a été protégé (KeySystem) et des informations permettant d'obtenir la clé de déchiffrement du contenu.

Dans chacun de ces exemples, en général, pour un contenu donné, le fichier descriptif du contenu contient en outre au moins une URL signalisant des données multimédia de ce contenu.

Ici, de préférence, le contenu d'authentification ne comporte pas de données multimédia, et son fichier descriptif, à la différence d'un fichier descriptif pour un contenu quelconque ne comporte pas d'URL signalisant des données multimédia.

Selon un mode de réalisation, un contenu d'authentification par système de DRM pris en charge est mis en forme par module 4, puis stocké dans le serveur 3. Chaque contenu d'authentification est accessible par l'intermédiaire d'une adresse URL (« *Uniform Resource Locator*»). La clé de chiffrement ainsi qu'un identifiant du système DRM associé sont mémorisés en association avec l'URL de chaque contenu d'authentification.

Selon une autre variante, le contenu d'authentification pour le système de DRM utilisé, est généré et mémorisé suite à la réception de la requête 34.

Selon une autre variante, plusieurs contenus d'authentification pour au moins un système de DRM sont générés et stockés, par exemple des contenus d'authentification comportant également des données multimédia.

En réponse à la requête de contenu d'authentification, l'adresse URL par l'intermédiaire de laquelle il est accessible est envoyée au lecteur de contenus multimédia 14 lors de l'étape 36.

Selon un autre mode de réalisation, le lecteur de contenus 14 a accès directement à un « Right Object » associé au système de DRM utilisé. Dans ce mode de réalisation, les étapes 34 et 36 sont traitées localement, sans échange avec le serveur 8. Dans ce cas, le contenu d'authentification est formé par le « Right Object » accessible directement, et le serveur 3 de contenus d'authentification est intégré au terminal 12.

Suite à la réception du contenu d'authentification, le lecteur de contenus multimédia 14 initialise (étape 38) une session DRM pour lire le contenu d'authentification reçu correspondant au système de DRM utilisé, conformément à la norme EME. Suite à cette initialisation, les données multimédia du contenu d'authentification, s'il en comporte, sont transmises en continu à l'étape 40, de manière analogue à toute transmission en continu de données multimédia de contenu multimédia.

Le contenu d'authentification étant protégé par chiffrement, une licence d'accès selon le système de DRM utilisé est nécessaire, comportant en particulier une clé de déchiffrement.

Le CDM 18 envoie alors, lors de l'étape 42, une requête au lecteur de contenus 14 afin d'obtenir une clé de déchiffrement du contenu d'authentification.

A la réception de la requête à l'étape 42, le lecteur de contenus 14 demande au CDM 18, à l'étape 44, de générer un challenge de licence sur la base du « Right Object » obtenu à partir du contenu d'authentification.

On appelle challenge de licence un bloc de données généré par le CDM à partir du « Right Object » afin d'obtenir la licence comportant la clé de déchiffrement du contenu.

Le challenge de licence généré peut comporter un identifiant CDM-ID du CDM. Dans ce cas, l'identifiant CDM-ID est plus précisément un identifiant de l'instance de CDM initialisée dans le terminal considéré, inséré par le CDM lui-même dans le challenge de licence. Le challenge de licence est cryptographiquement protégé en authenticité et en intégrité, de sorte qu'un serveur de licence peut ultérieurement vérifier son authenticité ainsi que son intégrité.

Le CDM 18 retourne à l'étape 46 un challenge de licence chiffré au lecteur de contenus 14.

A l'étape suivante 48 le lecteur de contenus 14 génère et envoie au serveur 8 une requête d'authentification, contenant un premier élément identifiant le système de DRM utilisé et un deuxième élément chiffré généré par le module CDM 18. Par exemple, le premier élément est la valeur du paramètre *KeySystem* qui identifie le système de DRM utilisé, et le deuxième élément est le challenge de licence chiffré fourni par le CDM 18.

En variante, le premier élément de la requête d'authentification est une adresse URL associée au système de DRM utilisé.

La requête d'authentification est reçue par le serveur 8 de licence.

Le serveur 8b du serveur 8 met en oeuvre une étape 50 au cours de laquelle il extrait le challenge de licence de la requête reçue, vérifie l'authenticité et l'intégrité du challenge de licence, et génère la licence requise pour lire le contenu d'authentification. La licence contient notamment la clé de déchiffrement à utiliser pour déchiffrer le contenu d'authentification.

Lors de la même étape 50, lorsque le challenge de licence comporte un identifiant CDM-ID du CDM, le serveur de licences 8b du serveur 8 l'extrait selon un schéma propre au système de DRM utilisé et le transmet au serveur d'authentification 8a.

Par exemple, lorsque l'agent DRM est PlayReady^{®}, la clé publique du module de déchiffrement transmise dans le challenge de licence est prise comme identifiant CDM-ID. En variante, tout autre élément unique transmis dans le challenge de licence peut être utilisé comme identifiant.

Par exemple, lorsque l'agent DRM est FairPlay^{®}, l'identifiant CDM-ID prend la valeur du paramètre HU du challenge SPC (« Server Playback Context »).

Lorsque le challenge de licence ne comporte pas d'identifiant CDM-ID du CDM, un tel identifiant est généré, mémorisé, inséré dans la licence et transmis au serveur d'authentification 8a, par le serveur de licences 8b. Par exemple, lorsque l'agent DRM est Widevine^{®}, l'identifiant CDM-ID prend la valeur du paramètre PCT (« Provider Client Token »). Cet identifiant est généré en utilisant un générateur pseudo-aléatoire.

Ainsi l'identifiant CDM-ID est un élément unique extrait du challenge de licence après déchiffrement.

Le serveur d'authentification 8a du serveur 8 génère ensuite, à l'étape 52, un identifiant de terminal, noté T-ID, à partir de l'identifiant CDM-ID.

Dans un mode de réalisation, l'identifiant de terminal est généré par application d'une fonction de hachage cryptographique, par exemple HMAC-SHA256 à l'identifiant de module de déchiffrement CDM-ID :
TID=HMAC-SHA256(CDM-ID, Ks)

Où Ks est une clé secrète.

En variante, tout autre algorithme de chiffrement appliqué à l'identifiant CDM-ID est applicable.

Une réponse contenant la licence générée et l'identifiant de terminal T-ID est envoyée au lecteur de contenus 14 à l'étape 54, qui transmet la licence reçue au CDM 18 à l'étape 56.

Enfin, le lecteur de contenus 14 extrait l'identifiant de terminal T-ID ainsi obtenu, le mémorise, et le transmet au module logiciel 16 à l'étape 58. L'identifiant de terminal est mémorisé par l'application du service de contenus.

Avantageusement, l'identifiant de terminal T-ID ainsi généré est unique pour un terminal d'utilisateur physique et un navigateur web donné, car il est généré à partir d'un identifiant unique associé au CDM initialisé dans le terminal conformément au système de DRM utilisé. Par principe, pour tout système de DRM, le CDM à l'origine d'un challenge de licence est identifié de manière unique.

La persistance de l'identifiant T-ID est liée à la persistance des données du CDM telle que gérée par le navigateur. Plus précisément, leurs durées de vie sont les mêmes.

Il est ensuite possible de vérifier, à tout instant, l'authenticité d'un identifiant de terminal d'utilisateur T-ID ainsi obtenu et mémorisé.

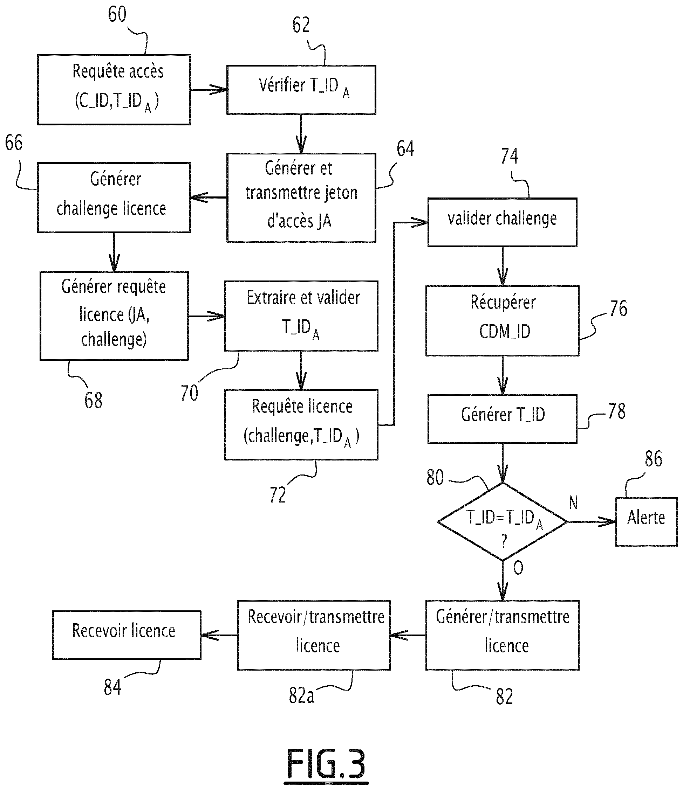

La figure 3 illustre schématiquement les principales étapes d'un procédé d'authentification de terminal d'utilisateur à l'aide d'un identifiant de terminal préalablement obtenu par le procédé d'identification décrit ci-dessus.

Le lecteur de contenus 14 a préalablement enregistré un identifiant de terminal T-ID_{A}, qui est également enregistré par l'opérateur fournisseur de contenus.

Pour lire un nouveau contenu multimédia, le lecteur de contenus 14 génère une requête d'accès 60 qui comporte un identifiant de contenu C-ID et l'identifiant de terminal T-ID_{A} préalablement enregistré.

La requête d'accès 60 est transmise au serveur 2, qui met en oeuvre un contrôle de droits d'accès. Le serveur vérifie, à l'étape 62, que le terminal identifié par T-ID_{A} a été préalablement enregistré, et, en cas de vérification positive, vérifie ensuite le droit du terminal T-ID_{A} d'accéder au contenu C-ID. Ensuite, seulement en cas de succès de cette deuxième vérification, un jeton d'accès au contenu identifié par C-ID est transmis au lecteur de contenus à l'étape 64. Le jeton d'accès comporte l'identifiant de terminal T-ID_{A}, et est cryptographiquement protégé en authenticité et en intégrité, de sorte qu'un serveur de contenus peut ultérieurement vérifier son authenticité ainsi que son intégrité.

Le lecteur de contenus est alors en mesure de générer, à l'étape 66, un challenge de licence tel que déjà décrit plus haut, et une requête de licence contenant le challenge de licence généré et le jeton d'accès à l'étape 68.

A réception de cette requête de licence, le serveur 2 vérifie l'authenticité et l'intégrité du jeton d'accès et, en cas de vérification positive, en extrait l'identifiant de terminal T-ID_{A} (étape 70).

Le serveur 2 envoie ensuite (étape 72) au serveur de licences 8 une requête de licence contenant le challenge de licence et l'identifiant de terminal T-ID_{A}.

Le serveur de licences 8b du serveur 8 vérifie l'authenticité et l'intégrité du challenge de licence reçu à l'étape 74, et, en cas de vérification positive, en extrait un identifiant de CDM, CDM-ID, à l'étape 76. La mise en oeuvre de l'étape 76 est analogue à la mise en oeuvre de l'étape 50 décrite en référence à la figure 2.

De manière analogue à l'étape 52, un identifiant de terminal T-ID est généré par le serveur d'authentification 8a du serveur 8 à l'étape 78 à partir de l'identifiant de module de déchiffrement CDM-ID.

Ensuite, à l'étape 80, l'identifiant T-ID calculé est comparé à l'identifiant de terminal T-ID_{A} reçu.

En cas d'égalité, le terminal est authentifié avec succès, et l'étape 80 est suivie d'une étape 82 de génération et de transmission de licence contenant la clé de déchiffrement du contenu multimédia chiffré identifié par C-ID. La licence est transmise au serveur 2, qui la transmet (étape 82a) au lecteur de contenus multimédia.

En cas d'inégalité lors de la comparaison mise en oeuvre à l'étape 80, une alarme est par exemple générée (étape 86) et transmise au service de contenus, et la licence n'est pas transmise ce qui a pour effet d'empêcher la lecture du contenu multimédia identifié par C-ID par le lecteur de contenus 14 du terminal d'utilisateur 12.

## Revendications

1. - Procédé d'identification, dans un système de fourniture de contenus multimédia protégés comprenant un serveur de licences (8, 8b) et un serveur de contenus (2), de terminal d'utilisateur (12) pour la réception de contenus multimédia protégés par un système de gestion de droits numériques et transmis en continu, sous forme chiffrée, via un réseau de communications ouvert, et pour la restitution sur ledit terminal d'utilisateur (12) par un navigateur (10) mettant en oeuvre un lecteur (14) de contenus multimédia et un module de déchiffrement de contenus (18) adapté à déchiffrer des contenus multimédia chiffrés selon le système de gestion de droits numériques, **caractérisé en ce qu'**il comporte des étapes, mises en oeuvre par le serveur de licences (8) modifié pour intégrer un serveur d'authentification (8a) adapté à mettre en oeuvre une fonction d'authentification, de :
- obtention (50) d'un identifiant dudit module de déchiffrement de contenus (18) mettant en oeuvre un accès (34, 36) à un contenu prédéterminé, dit contenu d'authentification associé au système de gestion de droits numériques, et préalablement mémorisé par un serveur (3) de contenus d'authentification, ledit contenu d'authentification comprenant ou permettant d'accéder à un objet de description de droits associé au système de gestion de droits numériques,
- génération (52) d'un identifiant de terminal en fonction de l'identifiant du module de déchiffrement de contenus,
et comportant en outre des étapes, mises en oeuvre par le lecteur (14) de contenus multimédia, de réception d'un message comportant ledit identifiant de terminal et de transmission (58) de l'identifiant de terminal ainsi obtenu à une application de fourniture de contenus multimédia protégés et chiffrés, ledit identifiant de terminal étant mémorisé par ladite application.

2. - Procédé selon la revendication 1 dans lequel ledit contenu d'authentification est mis en forme par chiffrement, selon ledit système de gestion de droits numériques, d'un fichier descriptif comprenant ledit objet de description de droits associé au système de gestion de droits numériques.

3. - Procédé selon la revendication 2, dans lequel ledit contenu d'authentification ne comporte pas d'indication permettant d'accéder à des données multimédia.

4. - Procédé selon l'une des revendications 1 à 3 comprenant une étape de requête de contenu d'authentification (34) par le lecteur de contenus multimédia, et une transmission (36) d'une adresse permettant d'accéder audit contenu d'authentification.

5. - Procédé selon la revendication 1 dans lequel ledit contenu d'authentification comprend ledit objet de description de droits associé au système de gestion de droits numériques, accessible directement par le lecteur de contenus multimédia.

6. Procédé selon l'une quelconque des revendications 1 à 5, comprenant, préalablement à la génération (52) d'un identifiant de terminal, une étape de réception d'une requête d'authentification contenant un premier élément identifiant le système de gestion de droits numériques et un deuxième élément chiffré généré par le module de déchiffrement de contenus, pour requérir une licence d'accès audit contenu d'authentification prédéterminé.

7. - Procédé selon la revendication 6, dans lequel ledit deuxième élément est un premier challenge de licence, généré (44) par ledit module de déchiffrement de contenus à partir dudit objet de description de droits, et cryptographiquement protégé pour permettre au serveur de licences (8b) de vérifier l'authenticité et l'intégrité dudit premier challenge de licence.

8. - Procédé selon la revendication 6 ou 7, comportant une extraction (50), en fonction dudit premier élément, d'un élément unique dudit deuxième élément après déchiffrement, et une affectation de la valeur dudit élément unique à l'identifiant de module de déchiffrement de contenus.

9. - Procédé selon l'une des revendications 1 à 8 comportant en outre une étape de transmission (54) au lecteur de contenus multimédia d'un message comportant ledit identifiant de terminal et d'une licence d'accès audit contenu d'authentification prédéterminé.

10. - Procédé selon l'une quelconque des revendications 1 à 9, dans lequel l'étape de génération (52) d'un identifiant de terminal comporte l'application d'une fonction de hachage cryptographique ou un algorithme de chiffrement à l'identifiant du module de déchiffrement de contenus.

11. - Procédé d'authentification de terminal d'utilisateur, dans un système de fourniture de contenus multimédia protégés comprenant un serveur de licences (8, 8b) et un serveur de contenus, le terminal d'utilisateur (12) étant adapté à recevoir des contenus multimédia protégés par un système de gestion de droits numériques et transmis en continu, sous forme chiffrée, via un réseau de communications ouvert, et lesdits contenus étant restitués sur ledit terminal d'utilisateur (12) par un navigateur (10) mettant en oeuvre un lecteur (14) de contenus multimédia et un module de déchiffrement de contenus (18) adapté à déchiffrer des contenus multimédia chiffrés selon le système de gestion de droits numériques, **caractérisé en ce qu'**il comporte,
suite à une requête d'accès (60) à un contenu multimédia protégé envoyée par ledit terminal d'utilisateur,
des étapes de :
- génération (68) d'une requête de licence comportant un premier identifiant (T_ID_{A}) du terminal d'utilisateur (12) préalablement mémorisé, et obtenu par un procédé d'identification de terminal conforme à l'une des revendications 1 à 10, et un troisième élément chiffré généré par le module de déchiffrement de contenus (18) du terminal d'utilisateur (12), destiné à requérir une licence d'accès audit contenu multimédia protégé, ledit troisième élément étant un deuxième challenge de licence cryptographiquement protégé pour permettre au serveur de licences de vérifier l'authenticité et l'intégrité dudit deuxième challenge de licence,
- envoi de ladite requête de licence audit serveur de licences modifié pour intégrer un serveur d'authentification adapté à mettre en oeuvre une fonction d'authentification,
- vérification (74) par ledit serveur de licences de l'authenticité et de l'intégrité du troisième élément chiffré,
- et, en cas de vérification positive, obtention (76) d'un deuxième identifiant de module de déchiffrement de contenus à partir dudit troisième élément chiffré et génération (78) d'un deuxième identifiant de terminal (T_ID) en fonction du deuxième identifiant de module de déchiffrement de contenus,
- comparaison (80) du premier identifiant de terminal (T-ID_{A}) avec le deuxième identifiant de terminal (T_ID), et, en cas d'égalité, authentification (82-84) dudit terminal d'utilisateur (12).

12. - Système d'identification de terminal d'utilisateur mis en oeuvre dans un système de fourniture de contenus multimédia protégés comprenant un serveur de licences (8, 8b), un serveur de contenus d'authentification (3) et un serveur de contenus (2), un terminal d'utilisateur (12) pour la réception de contenus multimédia protégés par un système de gestion de droits numériques et fournis en continu, sous forme chiffrée, via un réseau de communications ouvert, et restitués sur ledit terminal d'utilisateur (12) par un navigateur (10) mettant en oeuvre un lecteur (14) de contenus multimédia associé à un module de déchiffrement de contenus (18) adapté à déchiffrer des contenus multimédia chiffrés selon le système de gestion de droits numériques, **caractérisé en ce que** le serveur de licences (8,8b) est modifié pour intégrer un serveur d'authentification (8a) adapté à mettre en oeuvre un module d'authentification configuré pour :
- obtenir un identifiant dudit module de déchiffrement de contenus, mettant en oeuvre un accès à un contenu prédéterminé, dit contenu d'authentification associé au système de gestion de droits numériques, et préalablement mémorisé par le serveur (3) de contenus d'authentification, ledit contenu d'authentification comprenant ou permettant d'accéder à un objet de description de droits associé au système de gestion de droits numériques,
- générer un identifiant de terminal en fonction de l'identifiant du module de déchiffrement de contenus,
le lecteur (14) de contenus multimédia étant configuré pour mettre en oeuvre une réception d'un message comportant ledit identifiant de terminal, et une transmission de l'identifiant de terminal ainsi obtenu à une application de fourniture de contenus multimédia protégés et chiffrés, ledit identifiant de terminal étant mémorisé par ladite application.

13. - Système d'authentification de terminal d'utilisateur mis en oeuvre dans un système de fourniture de contenus multimédia protégés comprenant un serveur de licences (8, 8b) et un serveur de contenus (2), un terminal d'utilisateur (12) pour la réception de contenus multimédia protégés par un système de gestion de droits numériques et fournis en continu, sous forme chiffrée, via un réseau de communications ouvert, et restitués sur ledit terminal d'utilisateur (12) par un navigateur (10) mettant en oeuvre un lecteur (14) de contenus multimédia associé à un module de déchiffrement de contenus (18) adapté à déchiffrer des contenus multimédia chiffrés selon le système de gestion de droits numériques,
**caractérisé en ce que** le serveur de licences est modifié pour intégrer un serveur d'authentification adapté à mettre en oeuvre une fonction d'authentification, et **en ce que**, suite à une requête d'accès à un contenu multimédia protégé envoyée par ledit terminal d'utilisateur,
- le lecteur (14) de contenus multimédia est adapté à :
- générer une requête de licence comportant un premier identifiant (T_ID_{A}) du terminal d'utilisateur (12) préalablement mémorisé, et obtenu par un système d'identification conforme à la revendication 12, et un troisième élément chiffré généré par le module de déchiffrement de contenus (18) du terminal d'utilisateur (12), destiné à requérir une licence d'accès audit contenu multimédia protégé, ledit troisième élément étant un deuxième challenge de licence cryptographiquement protégé pour permettre au serveur de licences de vérifier l'authenticité et l'intégrité dudit deuxième challenge de licence,
- envoyer ladite requête de licence audit serveur de licences modifié pour intégrer un serveur d'authentification adapté à mettre en oeuvre une fonction d'authentification,
- et ledit serveur de licences (8a, 8b) est adapté à :
--vérifier l'authenticité et l'intégrité du troisième élément chiffré,
- et, en cas de vérification positive, à obtenir un deuxième identifiant de module de déchiffrement de contenus à partir dudit troisième élément chiffré et à générer un deuxième identifiant de terminal (T_ID) en fonction dudit deuxième identifiant du module de déchiffrement de contenus,
- comparer le premier identifiant de terminal (T_ID_{A}) avec le deuxième identifiant de terminal (T_ID), et, en cas d'égalité, authentifier ledit terminal d'utilisateur (12).

## Patentansprüche

1. Verfahren zur Identifizierung, in einem System zur Bereitstellung geschützter Multimediainhalte umfassend einen Lizenzserver (8, 8b) und einen Inhaltsserver (2), eines Benutzerendgeräts (12) zum Empfang von Multimediainhalten, die durch ein System für digitale Rechteverwaltung geschützt sind und in verschlüsselter Form kontinuierlich über ein offenes Kommunikationsnetz übertragen werden, und zur Wiedergabe auf dem Benutzerendgerät (12) durch einen Browser (10), der einen Player (14) für Multimediainhalte und ein Inhaltsentschlüsselungsmodul (18) implementiert, das angepasst ist, um Multimediainhalte zu entschlüsseln, die gemäß dem System für digitale Rechteverwaltung verschlüsselt sind, **dadurch gekennzeichnet, dass** es Schritte umfasst, die von dem Lizenzserver (8) implementiert werden, der modifiziert ist, um einen Authentifizierungsserver (8a) zu integrieren, der angepasst ist, um eine Authentifizierungsfunktion für Folgendes zu implementieren:
- Erlangen (50) einer Kennung des Inhaltsentschlüsselungsmoduls (18), das einen Zugang (34, 36) zu einem vorbestimmten Inhalt implementiert, der Authentifizierungsinhalt genannt wird, der mit dem System für digitale Rechteverwaltung assoziiert ist und zuvor von einem Server (3) für Authentifizierungsinhalte gespeichert wird, wobei der Authentifizierungsinhalt ein Objekt zur Beschreibung von Rechten umfasst, das mit dem System für digitale Rechteverwaltung assoziiert ist, oder einen Zugang zu diesem ermöglicht,
- Erzeugen (52) einer Endgerätekennung abhängig von der Kennung des Inhaltsentschlüsselungsmoduls,
und ferner umfassend Schritte, die von der Leseeinrichtung (14) von Multimediainhalten durchgeführt werden, zum Empfangen einer Nachricht, die die Endgerätekennung umfasst, und zum Übertragen (58) der somit erlangten Endgerätekennung an eine Anwendung zur Bereitstellung geschützter und verschlüsselter Multimediainhalte, wobei die Endgerätekennung von der Anwendung gespeichert wird.

2. Verfahren nach Anspruch 1, wobei der Authentifizierungsinhalt durch Verschlüsseln, gemäß dem System für digitale Rechteverwaltung, einer Beschreibungsdatei, umfassend das Rechtebeschreibungsobjekt, das mit dem System für digitale Rechteverwaltung assoziiert ist, formatiert wird.

3. Verfahren nach Anspruch 2, wobei der Authentifizierungsinhalt keine Angabe umfasst, die den Zugang zu Multimediadaten ermöglicht.

4. Verfahren nach einem der Ansprüche 1 bis 3, umfassend einen Schritt zum Anfordern von Authentifizierungsinhalt (34) durch den Player für Multimediainhalten und eine Übertragung (36) einer Adresse umfasst, die einen Zugang zu dem Authentifizierungsinhalt ermöglicht.

5. Verfahren nach Anspruch 1, wobei der Authentifizierungsinhalt das Rechtebeschreibungsobjekt umfasst, das mit dem System für digitale Rechteverwaltung assoziiert ist und auf das der Player von Multimediainhalten direkt zugreifen kann.

6. Verfahren nach einem der Ansprüche 1 bis 5, umfassend vor Erzeugen (52) einer Endgerätekennung einen Schritt zum Empfangen einer Authentifizierungsanforderung, die ein erstes Element, das das System für digitale Rechteverwaltung identifiziert, und ein zweites verschlüsseltes Element, das von dem Inhaltsentschlüsselungsmodul erzeugt wird, enthält, um eine Lizenz für einen Zugang zu dem vorbestimmten Authentifizierungsinhalt anzufordern.

7. Verfahren nach Anspruch 6, wobei das zweite Element eine erste Lizenzabfrage ist, die von dem Inhaltsentschlüsselungsmodul anhand des Rechtebeschreibungsobjekt erzeugt (44) wird und kryptografisch geschützt ist, um dem Lizenzserver (8b) zu ermöglichen, die Authentizität und Integrität der ersten Lizenzabfrage zu verifizieren.

8. Verfahren nach Anspruch 6 oder 7, umfassend eine Extraktion (50), abhängig von dem ersten Element, eines eindeutigen Elements des zweiten Elements nach Entschlüsselung und eine Zuweisung des Werts des eindeutigen Elements zu der Kennung des Inhaltsentschlüsselungsmoduls.

9. Verfahren nach einem der Ansprüche 1 bis 8, ferner umfassend einen Übertragungsschritt (54), an den Player für Multimediainhalte, einer Nachricht, umfassend die Endgerätekennung und eine Zugangslizenz zu dem vorbestimmten Authentifizierungsinhalt.

10. Verfahren nach einem der Ansprüche 1 bis 9, wobei der Erzeugungsschritt (52) einer Endgerätekennung die Anwendung einer kryptografischen Hashfunktion oder eines Verschlüsselungsalgorithmus auf die Kennung des Inhaltsentschlüsselungsmoduls umfasst.

11. Benutzerendgerät-Authentifizierungsverfahren in einem System zur Bereitstellung geschützter Multimediainhalte, umfassend einen Lizenzserver (8, 8b) und einen Inhaltsserver, wobei das Benutzerendgerät (12) zum Empfangen von Multimediainhalten angepasst ist, die durch ein System für digitale Rechteverwaltung geschützt sind und in verschlüsselter Form kontinuierlich über ein offenes Kommunikationsnetz übertragen werden, und wobei die Inhalte durch einen Browser (10), der einen Player (14) für Multimediainhalte und ein Inhaltsentschlüsselungsmodul (18) implementiert, das angepasst ist, um Multimediainhalte zu entschlüsseln, die gemäß dem System für digitale Rechteverwaltung verschlüsselt sind, auf dem Benutzerendgerät (12) wiedergegeben werden, **dadurch gekennzeichnet, dass** es Folgendes umfasst
nach einer Zugangsanforderung (60) zu einem geschützten Multimediainhalt, die von dem Benutzerendgerät gesendet wird,
die folgenden Schritte:
- Erzeugen (68) einer Lizenzanforderung, umfassend eine erste Kennung (T_ID_{A}) des Benutzerendgeräts (12), die zuvor gespeichert wird und durch ein Endgerät-Identifizierungsverfahren gemäß einem der Ansprüche 1 bis 10 erlangt wird, und eines dritten verschlüsselten Elements, das von dem Inhaltsentschlüsselungsmodul (18) des Benutzerendgeräts (12) erzeugt wird und dazu bestimmt ist, eine Zugangslizenz zu dem geschützten Medieninhalt anzufordern, wobei das dritte Element eine zweite Lizenzabfrage ist, die kryptografisch geschützt ist, um dem Lizenzserver zu ermöglichen, die Authentizität und Integrität der zweiten Lizenzchallenge zu überprüfen,
- Senden der Lizenzanforderung an den modifizierten Lizenzserver, um einen Authentifizierungsserver zu integrieren, der angepasst ist, um eine Authentifizierungsfunktion zu implementieren,
- Verifizieren (74), durch den Lizenzserver, der Authentizität und Integrität des dritten verschlüsselten Elements,
- und, im Fall einer positiven Verifizierung, Erlangen (76) einer zweiten Kennung des Inhaltsentschlüsselungsmoduls anhand des dritten verschlüsselten Elements und Erzeugen (78) einer zweiten Endgerätekennung (T_ID) abhängig von der zweiten Kennung des Inhaltsentschlüsselungsmoduls,
- Vergleichen (80) der ersten Endgerätekennung (T-ID_{A}) mit der zweiten Endgerätekennung (T_ID), und, im Fall einer Gleichheit, Authentifizierung (82-84) des Benutzerendgeräts (12).

12. Benutzerendgerät-Identifizierungssystem, das in einem System zur Bereitstellung geschützter Multimediainhalte implementiert ist, umfassend einen Lizenzserver (8, 8b), einen Authentifizierungsinhaltsserver (3) und einen Inhaltsserver (2), eines Benutzerendgeräts (12) zum Empfang von Multimediainhalten, die durch ein System für digitale Rechteverwaltung geschützt sind und in verschlüsselter Form kontinuierlich über ein offenes Kommunikationsnetz bereitgestellt und auf dem Benutzerendgerät (12) durch einen Browser (10) wiedergegeben werden, der einen Player (14) für Multimediainhalte und ein Inhaltsentschlüsselungsmodul (18) implementiert, der angepasst ist, um Multimediainhalte zu entschlüsseln, die gemäß dem System für digitale Rechteverwaltung verschlüsselt sind, **dadurch gekennzeichnet, dass** der Lizenzserver (8, 8b) modifiziert ist, um einen Authentifizierungsserver (8a) zu integrieren, der angepasst ist, um eine Authentifizierungsfunktion zu implementieren, die zu Folgendem konfiguriert ist:
- Erlangen einer Kennung des Inhaltsentschlüsselungsmoduls, das einen Zugang zu einem vorbestimmten Inhalt implementiert, der Authentifizierungsinhalt genannt wird, der mit dem System für digitale Rechteverwaltung assoziiert ist und zuvor von dem Server (3) für Authentifizierungsinhalte gespeichert wird, wobei der Authentifizierungsinhalt ein Objekt zur Beschreibung von Rechten umfasst, das mit dem System für digitale Rechteverwaltung assoziiert ist, oder einen Zugang zu diesem ermöglicht,
- Erzeugen einer Endgerätekennung abhängig von der Kennung des Inhaltsentschlüsselungsmoduls,
wobei der Player (14) für Multimediainhalte konfiguriert ist, einen Empfang einer Nachricht, umfassend die Endgerätekennung, und eine Übertragung der somit erlangten Endgerätekennung an eine Anwendung zur Bereitstellung geschützter und verschlüsselter Multimediainhalte zu implementieren, wobei die Endgerätekennung von der Anwendung gespeichert wird.

13. Benutzerendgerät-Authentifizierungssystem, das in einem System zur Bereitstellung geschützter Multimediainhalte implementiert ist, umfassend einen Lizenzserver (8, 8b) und einen Inhaltsserver (2), eines Benutzerendgeräts (12) zum Empfang von Multimediainhalten, die durch ein System für digitale Rechteverwaltung geschützt sind und in verschlüsselter Form kontinuierlich über ein offenes Kommunikationsnetz bereitgestellt und auf dem Benutzerendgerät (12) durch einen Browser (10) wiedergegeben werden, der einen Player (14) für Multimediainhalte und ein Inhaltsentschlüsselungsmodul (18) implementiert, der angepasst ist, um Multimediainhalte zu entschlüsseln, die gemäß dem System für digitale Rechteverwaltung verschlüsselt sind,
**dadurch gekennzeichnet, dass** der Lizenzserver modifiziert ist, um einen Authentifizierungsserver zu integrieren, der angepasst ist, um eine Authentifizierungsfunktion zu implementieren, und dass nach einer Zugangsanforderung zu einem geschützten Multimediainhalt, die von dem Benutzerendgerät gesendet wird,
- der Player (14) für Multimediainhalte zu Folgendem angepasst ist:
- Erzeugen einer Lizenzanforderung, umfassend eine erste Kennung (T_ID_{A}) des Benutzerendgeräts (12), die zuvor gespeichert und von einem Identifikationssystem gemäß Anspruch 12 erlangt wird, und eines dritten verschlüsselten Elements, das von dem Inhaltsentschlüsselungsmodul (18) des Benutzerendgeräts (12) erzeugt wird und dazu bestimmt ist, eine Zugangslizenz zu dem geschützten Medieninhalt anzufordern, wobei das dritte Element eine zweite Lizenzabfrage ist, die kryptografisch geschützt ist, um dem Lizenzserver zu ermöglichen, die Authentizität und Integrität der zweiten Lizenzchallenge zu überprüfen,
- Senden der Lizenzanforderung an den modifizierten Lizenzserver, um einen Authentifizierungsserver zu integrieren, der angepasst ist, um eine Authentifizierungsfunktion zu implementieren,
- und wobei der Lizenzserver (8a, 8b) zu Folgendem angepasst ist:
- Verifizieren der Authentizität und Integrität des dritten verschlüsselten Elements,
- und im Fall einer positiven Verifizierung, Erlangen einer zweiten Kennung des Inhaltsentschlüsselungsmoduls anhand des dritten Elements und Erzeugen einer zweiten Endgerätekennung (T_ID) abhängig von der zweiten Kennung des Inhaltsentschlüsselungsmoduls,
- Vergleichen der ersten Endgerätekennung (T_ID_{A}) mit der zweiten Endgerätekennung (T_ID) und, im Fall einer Gleichheit, Authentifizieren des Benutzerendgeräts (12).

## Claims

1. - A method for identification, in a system for providing protected multimedia content comprising a license server (8, 8b) and a content server (2), of a user terminal (12) for receiving protected multimedia content by a digital rights management system and streamed, in encrypted form, via an open communication network, and for the retrieval, on said user terminal (12), by a browser (10) implementing a multimedia content reader (14) and a content decryption module (18) suitable for decrypting encrypted multimedia content according to the digital rights management system, **characterized in that** it includes steps, carried out by the license server (8) modified to incorporate an authentication server (8a) suitable for implementing an authentication function, for:
- obtaining (50) an identifier of said content decryption module (18) implementing access to predetermined content (34, 36), called authentication content, associated with the digital rights management system, and stored beforehand by an authentication content server (3), said authentication content comprising or allowing access to a rights description object associated with the digital rights management system,
- generating (52) a terminal identifier as a function of the identifier of the content decryption module,
and comprising steps, carried out by the multimedia content reader (14), of receiving a message including said terminal identifier and providing (58) the received terminal identifier to an application for providing protected and encrypted multimedia content, said terminal identifier being stored by said application.

2. - The method according to claim 1, wherein said authentication content is formatted by encryption, according to said digital rights management system, of a descriptive file containing said rights description object associated with the digital rights management system.

3. - The method according to claim 2, wherein said authentication content does not include any indication making it possible to access multimedia data.

4. - The method according to one of claims 1 to 3, comprising a step for requesting authentication content (34) by the multimedia content reader, and a transmission (36) of an address making it possible to access said authentication content.

5. - The method according to claim 1, wherein said authentication content comprises said rights description object associated with the digital rights management system, accessible directly by the multimedia content reader.

6. The method according to any one of claims 1 to 5, comprising, before generating (52) a terminal identifier, a step for receiving an authentication request containing a first element identifying the digital rights management system and a second encrypted element generated by the content decryption module, for requesting an access license to said predetermined authentication content.

7. - The method according to claim 6, wherein said second element is a first license challenge, generated (44) by said content decryption module from said rights description object, and cryptographically protected to allow the license server (8b) to verify the authenticity and the integrity of said first license challenge.

8. - The method according to claim 6 or 7, including an extraction (50), as a function of said first element, of a unique element from said second element after decryption, and an allocation of the value of said unique element to the content decryption module identifier.

9. - The method according to any of claims 1 to 8, further including a step for sending (54) the multimedia content reader a message including said terminal identifier and an access license to said predetermined authentication content.

10. - The method according to any one of claims 1 to 9, wherein the step for generating (52) a terminal identifier includes applying a cryptographic hash function or an encryption algorithm to the identifier of the content decryption module.

11. - A method for authenticating a user terminal, in a system for providing protected multimedia content comprising a license server (8, 8b) and a content server, the user terminal (12) being suitable for receiving multimedia content protected by a digital rights management system and streamed, in encrypted form, via an open communication network, and said content being retrieved, on said user terminal (12), by a browser (10) implementing a multimedia content reader (14) and a content decryption module (18) suitable for decrypting encrypted multimedia content according to the digital rights management system, **characterized in that** it includes,
following a request (60) to access protected multimedia content sent by said user terminal,
the following steps:
- generating (68) a license request including a first identifier (T_ID_{A}) of the user terminal (12) previously stored, and obtained by a terminal identification method according to one of claims 1 to 10, and a third encrypted element generated by the content decryption module (18) of the user terminal (12), intended to request an access license to said protected multimedia content, said third element being a second license challenge cryptographically protected to allow the license server to verify the authenticity and integrity of said second license challenge,
- sending said license request to said modified license server in order to incorporate an authentication server suitable for implementing an authentication function,
- verifying (74), via said license server, the authenticity and integrity of the third encrypted element, and
- in case of positive verification, obtaining (76) a second content decryption module identifier from said third encrypted element and generating (78) a second terminal identifier (T_ID) as a function of the second content decryption module identifier,
- comparing (80) the first terminal identifier (T-ID_{A}) with the second terminal identifier (T_ID), and in case of a match, authenticating (82-84) said user terminal (12).

12. - A system for identifying a user terminal implemented in a system for providing protected multimedia content comprising a license server (8, 8b), an authentication content server (3) and a content server (2), a user terminal (12) for receiving protected multimedia content by a digital rights management system and streamed, in encrypted form, via an open communication network, and retrieved, on said user terminal (12), by a browser (10) implementing a multimedia content reader (14) associated with a content decryption module (18) suitable for decrypting encrypted multimedia content according to the digital rights management system, **characterized in that** the license server (8, 8b) is modified to incorporate an authentication server (8a) suitable for implementing an authentication module configured to:
- obtaining an identifier of said content decryption module, implementing access to predetermined content, called authentication content, associated with the digital rights management system, and stored beforehand by the authentication content server (3), said authentication content comprising or allowing access to a rights description object associated with the digital rights management system,
- generating a terminal identifier as a function of the identifier of the content decryption module,
the multimedia content reader (14) being configured to implement receiving a message including said terminal identifier and providing the received terminal identifier to an application for providing protected and encrypted multimedia content, said terminal identifier being stored by said application.

13. - An authentication system for identifying a user terminal implemented in a system for providing protected multimedia content comprising a license server (8, 8b) and a content server (2), a user terminal (12) for receiving protected multimedia content by a digital rights management system and streamed, in encrypted form, via an open communication network, and retrieved, on said user terminal (12), by a browser (10) implementing a multimedia content reader (14) associated with a content decryption module (18) suitable for decrypting encrypted multimedia content according to the digital rights management system,
**characterized in that** the license server is modified in order to incorporate an authentication server suitable for implementing an authentication function, and **in that**, following a request to access protected multimedia content sent by said user terminal,
- the multimedia content reader (14) is configured for:
- generating a license request including a first identifier (T_ID_{A}) of the user terminal (12) previously stored, and obtained by an identification system according to claim 12, and a third encrypted element generated by the content decryption module (18) of the user terminal (12), intended to request an access license to said protected multimedia content, said third element being a second license challenge cryptographically protected to allow the license server to verify the authenticity and integrity of said second license challenge,
- sending said license request to said modified license server in order to incorporate an authentication server suitable for implementing an authentication function,
- and said license server (8a, 8b) is suitable for:
- verifying the authenticity and integrity of the third encrypted element, and
- in case of positive verification, obtaining a second content decryption module identifier from said third encrypted element and generating a second terminal identifier (T_ID) as a function of said second identifier of the content decryption module,
- comparing the first terminal identifier (T_ID_{A}) with the second terminal identifier (T_ID), and in case of a match, authenticating said user terminal (12).
